# EUROPEAN PATENT SPECIFICATION

(11) **EP 1 857 170 B1**
(45) Date of publication and mention of the grant of the patent: **18.02.2009**
(21) Application number: 07107302.7
(22) Date of filing: 02.05.2007
(51) Int. Cl.: B01D 53/94, B01J 21/06, B01J 23/00, B01J 23/10, B01J 23/46, B01J 35/00, B01J 35/04, B01J 37/02, B01J 37/03, F01N 3/28, B01J 23/63

(54) **Exhaust gas purification catalyst**
Abgasreinigungskatalysator
Catalyseur de purification des gaz d'échappement

(30) Priority: 15.05.2006 JP 2006135398
(43) Date of publication of application: 21.11.2007
(73) Proprietor: Mazda Motor Corporation, Aki-gun, Hiroshima 730-8670 (JP)
(72) Inventor: Kawabata, Hisaya,c/o Mazda Motor Corporation, 730-870 Hiroshima Hiroshima (JP); Akamine, Masaaki, c/o Mazda Motor Corporation, 730-8670 Hiroshima Hiroshima (JP); Shigetsu, Masahiko, c/o Mazda Motor Corporation, 730-8670 Hiroshima Hiroshima (JP)
(74) Representative: Thoma, Michael

(56) References cited:
- EP-A- 1 520 616
- EP-A- 1 598 104
- WO-A-99/67020
- JP-A- 2004 223 403

## Description

### BACKGROUND OF THE INVENTION

### (a) Field of the Invention

This invention relates to exhaust gas purification catalysts.

### (b) Description of the Related Art

Exhaust gas purification catalysts employ various catalytic metals. For example, three-way catalysts often employ platinum (Pt) and palladium (Pd) both having excellent HC and CO oxidation performance and rhodium (Rh) having excellent NOx reduction performance because of the need to simultaneously convert hydrocarbons (HC), carbon monoxide (CO) and nitrogen oxides (NOx). Furthermore, exhaust gas purification catalysts employ, as support materials for these catalytic metals, activated alumina having a large specific surface area and an oxygen storage component. In particular, activated alumina is useful as a support material because it can carry the catalytic metals in a highly dispersed form.

Common knowledge about Rh carried on activated alumina is that when exposed to high-temperature exhaust gas, Rh dissolves as a solid solution in activated alumina to become deactivated. Published Japanese Patent Application No. 2005-103410 A (EP 1 520 616 A) discloses a technique for preventing this phenomenon by coating the surface of activated alumina with zirconia and carrying Rh on the zirconia coating. This technique not only prevents Rh from dissolving as a solid solution in activated alumina but also promotes a steam reforming reaction to facilitate hydrogen production. Thus, it can be expected that the produced hydrogen acts advantageously for NOx reduction. EP 15 20 616 A shows a catalytic converter with rhodium serving as a catalytic metal, wherein the rhodium is carried on zirconia particles. Furthermore, JP 2004-223403 A shows a catalytic converter having a rhodium catalyst carried on zirconium-cerium mixed oxide particles, wherein it is said that neodymium can be added as rare earth metal.

### SUMMARY OF THE INVENTION

The inventor made a detailed analysis of the behavior of Rh carried on the above-mentioned zirconia-coated activated alumina. As a result, he found that when an exhaust gas condition (the A/F ratio) changes from fuel-lean to fuel-rich, oxidized Rh is likely to be reduced and that, however, this does not necessarily act advantageously for the exhaust gas purification performance. Furthermore, he also found that restraining the transition of Rh from oxidized to reduced state improves the exhaust gas purification performance of the catalyst.

Based on the above findings, the present invention has the object of providing an exhaust gas purification catalyst having a higher exhaust gas purification performance than the related art by making improvements to zirconia-coated activated alumina carrying Rh thereon as described above.

To attain the above object, according to the present invention, lanthanum (La)-containing zirconium-based mixed oxide (composite oxide) is used in place of zirconia of zirconia-coated activated alumina to restrain significant change of the oxidized state of Rh, thereby improving the exhaust gas purification performance of the catalyst. This is described in detail below.

The present invention is directed to an exhaust gas purification catalyst in which a catalytic coating on a support contains a catalytic metal, a zirconium-based mixed oxide, activated alumina and an oxygen storage component, the exhaust gas purification catalyst contains at least Rh as the catalytic metal, the zirconium-based mixed oxide is coated on at least some of particles of the activated alumina, and Rh serving as the catalytic metal is carried on the zirconium-based mixed oxide coated on the activated alumina particles and is also carried on the oxygen storage component.

Furthermore, the exhaust gas purification catalyst is characterized in that the zirconium-based mixed oxide is a mixed oxide containing zirconium as a main ingredient and containing lanthanum, and the ratio of the amount of Rh carried on the zirconium-based mixed oxide coated on the activated alumina particles to the sum of the amount of Rh carried on the zirconium-based mixed oxide coated on the activated alumina particles and the amount of Rh carried on the oxygen storage component is from 40 mass% to 75 mass% both inclusive..

The catalyst according to the present invention exhibits a higher exhaust gas purification performance (particularly as a three-way catalyst) than the related art. The following two reasons can be given for this.

The first reason is that even if the ambient atmosphere changes from fuel-lean to fuel-rich conditions (i.e., the A/F ratio of exhaust gas changes from lean to rich), Rh on the ZrLa mixed oxide coated on activated alumina particles is not reduced so much but kept appropriately oxidized.

This is believed to be because carriage of Rh on the ZrLa mixed oxide facilitates the formation of La-O-Rh bonds between the ZrLa mixed oxide and Rh and, thus, the oxidized state of Rh becomes less likely to be affected by changes of the ambient atmosphere. In other words, Rh is believed to become more likely to be kept oxidized by the action of La. If Rh on the mixed oxide is reduced, this will be disadvantageous to the oxidation of HC and CO. In the present invention, however, since Rh on the ZrLa mixed oxide is kept appropriately oxidized even if the ambient atmosphere becomes fuel-rich, deterioration of the HC oxidation capacity and CO oxidation capacity of the catalyst can be reduced. Furthermore, since HC and CO can be oxidized even under fuel-rich conditions, NOx reduction progresses concurrently with the oxidization of HC and CO, which is advantageous in converting NOx by reduction.

On the other hand, since the oxygen storage component stores oxygen, Rh on the oxygen storage component is basically kept reduced not only under fuel-rich conditions but also under fuel-lean conditions and, therefore, effectively acts to reduce NOx.

Hence, the catalyst according to the present invention provides the coexistence of reduced Rh on the oxygen storage component and oxidized Rh on the ZrLa mixed oxide irrespective of whether the ambient atmosphere is fuel-lean or fuel-rich, thereby improving the exhaust gas purification performance.

The second reason is that since Rh on the ZrLa mixed oxide is likely to be kept oxidized, oxygen release from the oxygen storage component upon change from fuel-lean to fuel-rich conditions is promoted.

Specifically, when the ambient atmosphere becomes fuel-rich, the concentrations of HC and CO in the exhaust gas are increased but Rh particles on the ZrLa mixed oxide are kept oxidized even under fuel-rich conditions. Therefore, the Rh particles effectively acts to oxidize HC and CO so that the oxygen atom on each Rh particle is removed. However, since each Rh particle on the ZrLa mixed oxide is likely to be kept oxidized, it acts to take another oxygen atom from the surroundings. Therefore, oxygen atoms are actively released from the oxygen storage component in order to resupply oxygen atoms to Rh particles on the ZrLa mixed oxide.

As a result, the catalyst exhibits high activity, i.e., enhances the capacity to convert HC and CO in exhaust gas by oxidation and concurrently efficiently reduces NOx.

The ratio of the amount of Rh carried on the ZrLa mixed oxide coated on the activated alumina particles to the sum of the amount of Rh carried on the ZrLa mixed oxide coated on the activated alumina particles and the amount of Rh carried on the oxygen storage component is from 40 mass% to 75 mass% both inclusive and more preferably from 50 mass% to 70 mass% both inclusive. If the amount of oxidized Rh on the ZrLa mixed oxide is relatively small, this is disadvantageous to the conversion of HC and CO by oxidation. On the contrary, if the amount of oxidized Rh on the ZrLa mixed oxide is relatively large, this results in a relatively small amount of reduced Rh on the oxygen storage component, which is disadvantageous to the conversion of NOx by reduction. If the ratio is within the above range, oxidized Rh and reduced Rh can coexist at their respective appropriate amounts, thereby providing efficient purification of exhaust gas.

To improve the light-off performance of the catalyst, the mass ratio of ZrO₂ to La₂O₃ in the ZrLa mixed oxide is preferably not smaller than 5 to 1 and more preferably about 20 to 1.

The oxygen storage components applicable to the present invention include ceria, CeZr mixed oxide and CeZrNd mixed oxide.

As described so far, since in the present invention Rh-carried ZrLa mixed oxide-coated activated alumina particles and a Rh-carried oxygen storage component coexist in the catalytic coating, oxidized Rh and reduced Rh can be kept coexisting even if the A/F ratio of exhaust gas changes from lean to rich and vice versa. This is advantageous to the purification of the exhaust gas by oxidation reaction and reduction reaction and enhances the oxygen storage/release capacity of the oxygen storage component, thereby significantly improving the exhaust gas purification performance of the catalyst.

### BRIEF DESCRIPTION OF THE DRAWINGS

Figure **1** shows a schematic structure of a motor vehicle spark ignition engine at which an exhaust gas purification catalyst according to an embodiment of the present invention is mounted.
Figure **2** is perspective and partly enlarged views showing the structure of the exhaust gas purification catalyst.
Figure **3** is a graph showing the light-off temperatures of various kinds of catalyst materials.
Figure **4** is a graph showing the high-temperature catalytic conversion efficiencies of the various kinds of catalyst materials.
Figure **5** is a graph showing effects of the mass ratio of Rh carried on ZrLaO/Al₂O₃ on the light-off temperature.
Figure **6** is a graph showing the results of examination of Rh 3d electron binding energy of Rh/ZrLaO/Al₂O₃ by x-ray photoelectron spectroscopy (XPS).
Figure **7** is a graph showing the results of examination of Rh 3d electron binding energy of Rh/ZrO₂/Al₂O₃ by XPS.
Figure **8** is a graph showing effects of the mass ratio of Rh carried on ZrLaO/Al₂O₃ on the oxygen release capacity of an OSC.
Figure **9** is a cross-sectional view showing part of a device for measuring the amount of oxygen release.
Figure **10** schematically shows fuel-lean conditions and fuel-rich conditions for a catalyst in which Rh/ZrLaO/Al₂O₃ coexists with Rh/OSC.

### DETAILED DESCRIPTION OF THE INVENTION

A description is given below of the best mode for carrying out the present invention with reference to the drawings.

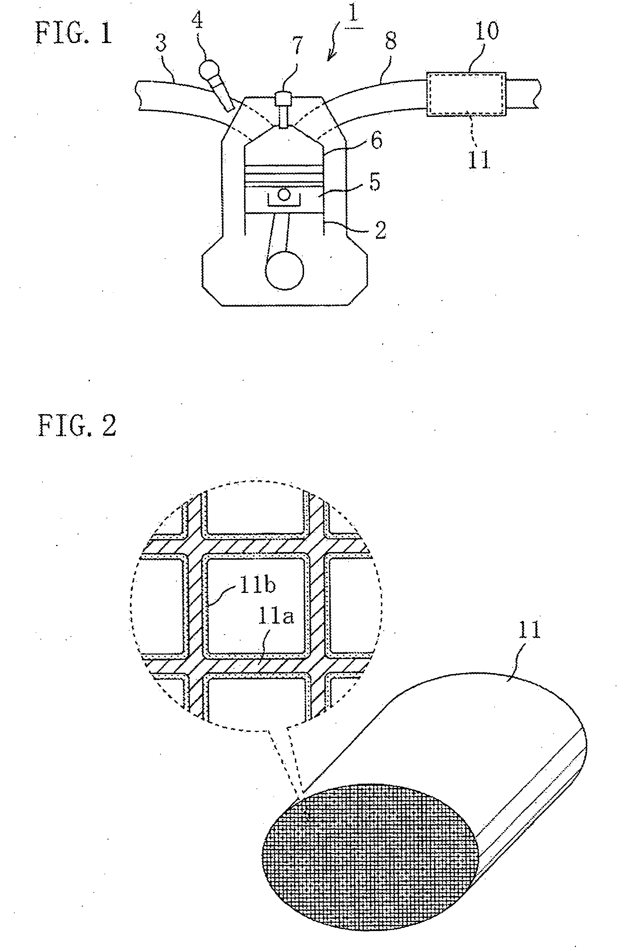

Figure **1** shows a schematic structure of a motor vehicle spark ignition engine **1** at which a three-way catalyst **11** is mounted as an exhaust gas purification catalyst according to this embodiment. The engine **1** has a plurality of cylinders **2** (only one shown in the figure). Air and fuel are supplied through an intake passage **3** and a fuel injection valve **4,** respectively, to a combustion chamber **6** to form an air-fuel mixture. The air-fuel mixture explosively combusts in the combustion chamber **6** by spark ignition of an ignition plug **7** and the resultant exhaust gas is discharged through an exhaust passage **8** to the atmosphere. A catalytic converter **10** is disposed in the exhaust passage **8** and contains the three-way catalyst **11.** Reference numeral **5** denotes a piston.

As shown in Figure **2****,** the three-way catalyst **11** has a structure in which a catalytic coating **11b** is formed on the walls of exhaust gas channels in a honeycomb support **11a** made of cordierite. The catalytic coating **11b** contains activated alumina particles coated with a Rh-carried ZrLa mixed oxide (Rh/ZrLaO/Al₂O₃) and a Rh-carried oxygen storage component (Rh/OSC). The ZrLa mixed oxide-coated activated alumina particles may be those in which a rare earth metal, such as La, is dissolved as a solid solution by about 3 to about 6 mole%.

The present invention imposes no special limitations on that the catalytic coating **11b** contains additional one or more catalytic components or that the ZrLa mixed oxide-coated activated alumina particles and/or the oxygen storage component carry another one or more kinds of catalytic metals in addition to Rh. Alternatively, the three-way catalyst **11** may have a multilayered structure in which the catalytic coating **11b** and another one or more catalytic coatings of different catalyst compositions are stacked one on another.

A detailed description is given below of examples of the catalytic coating **11b.** (Preparation of Rh/ZrLaO/Al₂O₃)

Activated alumina powder (γ-Al₂O₃) is dispersed in a mixed solution of zirconium nitrate and lanthanum nitrate. A specified amount of aqueous ammonia is added to the mixed solution to reach an alkaline pH, thereby forming a precipitate (coprecipitation). The precipitate is presumed to be activated alumina particles coated with a mixed oxide precursor (hydroxide of Zr and La). The obtained precipitate is filtered, rinsed, dried by keeping it at 200°C for two hours and calcined by keeping it at 500°C for two hours, thereby obtaining activated alumina particles whose surfaces are coated with ZrLa mixed oxide (ZrLaO/Al₂O₃).

The ZrLaO/Al₂O₃ is mixed with an aqueous solution of rhodium nitrate and then evaporated to dryness, thereby obtaining a Rh-carried ZrLaO/Al₂O₃ (Rh/ZrLaO/Al₂O₃).

### (Formation of Catalytic Coating)

An oxygen storage component (OSC) is mixed with an aqueous solution of rhodium nitrate and evaporated to dryness, thereby obtaining a Rh-carried OSC (Rh/OSC). Then, the Rh/OSC, the Rh/ZrLaO/Al₂O₃ and a binder (ZrO₂) are mixed and water and nitric acid are also added and mixed by stirring with a disperser, thereby obtaining a slurry. A honeycomb support **11a** made of cordierite is immersed in the slurry and then picked up therefrom and surplus slurry is removed by air blow. This process is repeated until a specified amount of slurry is coated on the exhaust gas channel walls of the support **11a.** Thereafter, the support **11a** is heated from normal temperature to 450°C at a constant rate of temperature increase in 1.5 hours and then kept at 450°C for two hours (dried and calcined), thereby forming a catalytic coating **11b** on the support **11a.**

### (La Ratio in ZrLa Mixed Oxide)

Four kinds of Rh-carried ZrLa mixed oxide-coated activated aluminas (Rh/ZrLaO/Al₂O₃) with different ZrO₂ to La₂O₃ mass ratios of 20 to 1, 10 to 1, 5 to and 1 to 1 were prepared according to the above preparation method. In addition to these, Rh-carried activated alumina (Rh/Al₂O₃) obtained by carrying Rh on activated alumina particles by evaporation to dryness and Rh-carried zirconia-coated activated alumina (Rh/Zr/Al₂O₃) obtained by using ZrO₂ in place of ZrLaO in Rh/ZrLaO/Al₂O₃ (carrying Rh on ZrO₂-coated activated alumina particles) were prepared. Then, these six kinds of catalyst materials were carried on their respective honeycomb supports, thereby preparing six samples. The amount of Rh carried per L of each support was 1.0 g/L.

Each of these samples was aged in an atmosphere of 2% O₂ and 10% H₂O at 1000°C for 24 hours, then attached to a fixed-bed flow reactor and measured in terms of T50 (°C) and C400 (%) which are indices for HC, CO and NOx conversion performance.

The simulated exhaust gas (including a mainstream gas and gases for changing the A/F ratio) used in the measurement had an A/F ratio of 14.7±0.9 and the flow rate of the simulated exhaust gas into each catalyst sample was 25 L/min. Specifically, a mainstream gas was allowed to flow constantly at an A/F ratio of 14.7 and a specified amount of gas for changing the A/F ratio was added in pulses at a rate of 1 Hz, so that the A/F ratio was forcedly oscillated within the range of ±0.9. O₂ gas was used in changing the A/F ratio to a leaner value (15.6). H₂ gas and CO gas were used in changing the A/F ratio to a richer value (13.8). The composition of the mainstream gas having an A/F ratio of 14.7 was as follows.

### - Mainstream Gas -

Co₂: 13.9%, O₂: 0.6%, CO: 0.6%, H₂: 0.2%, C₃H₆: 0.056%, NO: 0.1%, H₂O: 10% and N₂: the rest

T50 (°C) is the gas temperature at the catalyst entrance when the concentration of each exhaust gas component (HC, CO and NOx) detected downstream of the catalyst reaches half of that of the corresponding exhaust gas component flowing into the catalyst (when the conversion efficiency reaches 50%) after the temperature of the simulated exhaust gas is gradually increased (i.e., the light-off temperature), and indicates the low-temperature catalytic conversion performance of the catalyst.

C400 (%) is the catalytic conversion efficiency of each exhaust gas component (HC, CO and NOx) when the simulated exhaust gas temperature at the catalyst entrance is 400°C and indicates the high-temperature catalytic conversion performance of the catalyst.

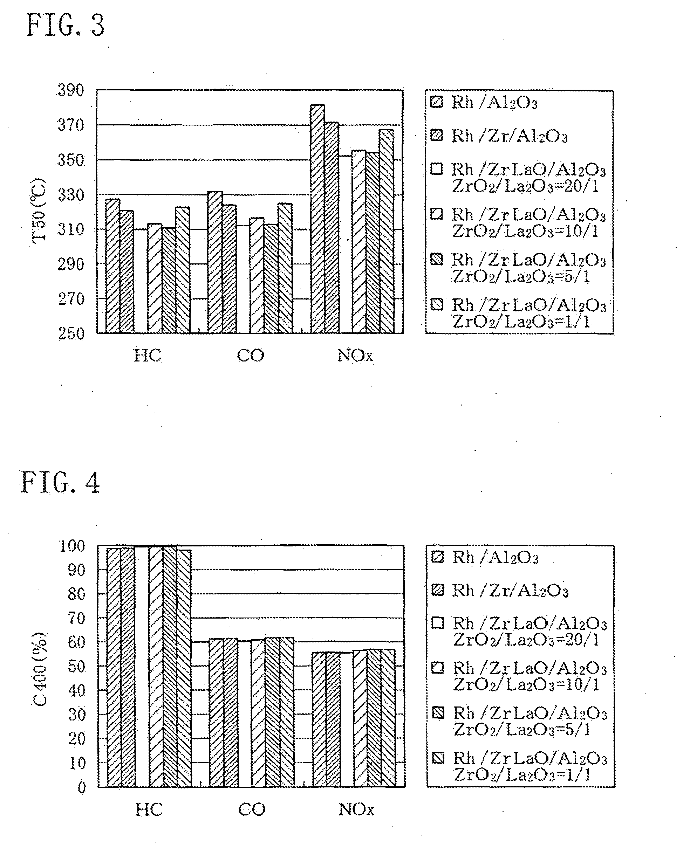

The measurement results for T50 (°C) and the measurement results for C400 (%) are shown in Figures **3** and **4****,** respectively. In respect of C400 (Figure **4**), no substantial difference is recognized among the samples. Referring to T50 (Figure 3), when the ZrO₂ to La₂O₃ mass ratio was 20 to 1, 10 to 1 and 5 to 1, the effects of addition of La to the Zr-based mixed oxides were exhibited, i.e., the light-off temperatures were reduced. Furthermore, when the ZrO₂ to La₂O₃ mass ratio was 20 to 1, the best results were exhibited. Therefore, it can be said that the ZrO₂ to La₂O₃ mass ratio is preferably not smaller than 5 to 1 and more preferably about 20 to 1.

### (Rh distribution ratio)

In view of the above results on the La ratio in ZrLa mixed oxide, a plurality of three-way catalysts having different Rh distribution ratios between ZrLaO/Al₂O₃ and the OSC were prepared using the ZrLa mixed oxide with a ZrO₂ to La₂O₃ mass ratio of 20 to 1 according to the above-described preparation method. In other words, a plurality of three-way catalysts were prepared which have different mass ratios of the amount of Rh carried on ZrLaO/Al₂O₃ to the sum of the amount of Rh carried on ZrLaO/Al₂O₃ and the amount of Rh carried on the OSC.

Also in the cases (comparative examples) using ZrO₂ in place of ZrLa mixed oxide, a plurality of three-way catalysts were also prepared which have different mass ratios of the amount of Rh carried on ZrO₂/Al₂O₃ to the sum of the amount of Rh carried on Zr0₂/Al₂O₃ and the amount of Rh carried on the OSC.

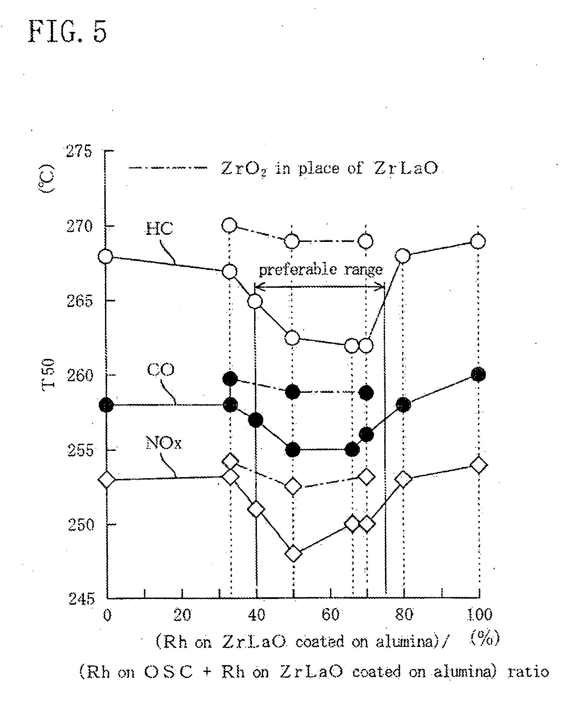

Both in the inventive examples and in the comparative examples, the sum of the amounts of Rh was 0.167 g/L and a CeZrNd mixed oxide of CeO₂:ZrO₂:Nd₂O₃ = 10:80:10 (mass ratio) was employed. Then, each three-way catalyst was aged in the same manner as described above and then measured in terms of T50 in the same manner. The measurement results are shown in Figure **5****.** Note that the term "Rh on ZrLaO coated on alumina" in the figure means the amount of Rh carried on ZrLaO/Al₂O₃ and the term "Rh on OSC" means the amount of Rh carried on the OSC.

Referring to Figure **5****,** the comparative examples using ZrO₂ in place of ZrLa mixed oxide did not significantly change the T50 value even if the mass ratio of Rh carried on ZrO₂/Al₂O₃ changed. In contrast, the inventive examples using ZrLa mixed oxides significantly changed the T50 value with changes in the mass ratio of Rh carried on ZrLaO/Al₂O₃ ranging from 33 mass% (the ratio of the amount of Rh carried on ZrLaO/Al₂O₃ to the amount of Rh carried on the OSC = 1 to 2) to 80 mass%, both inclusive. It can be seen from Figure **5** that the preferable range of the mass ratio of Rh carried on ZrLaO/Al₂O₃ is from 40 to 75 mass% both inclusive and the more preferable range is from 50 to 70 mass% both inclusive.

### (Mechanism of Effect Development of Inventive Catalyst)

As described above, the catalyst according to the present invention improves the exhaust gas purification performance, particularly the low-temperature activity, owing to a combination of Rh/ZrLaO/Al₂O₃ and Rh/OSC. The reason for this is considered below.

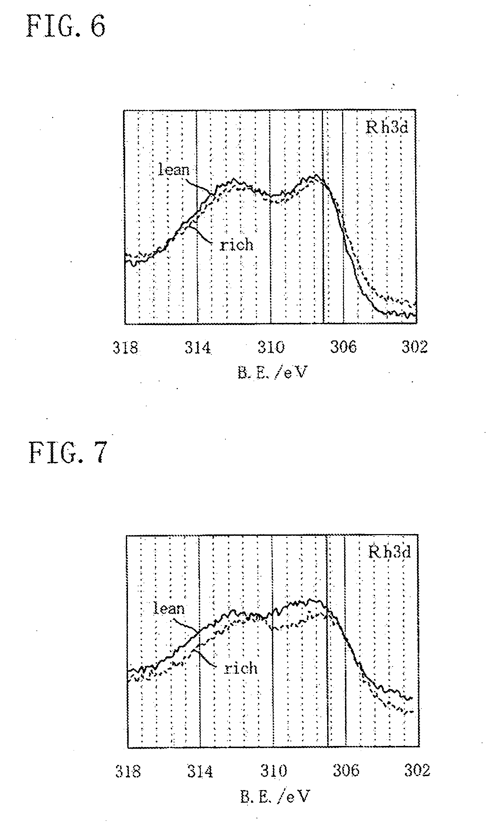

Figure **6** shows the results obtained by keeping Rh/ZrLaO/Al₂O₃ (an unaged fresh material having an amount of Rh carried of 1.0 g/L) in a fuel-lean atmosphere (having an A/F ratio of 15.0) at 400°C for five minutes and then in a fuel-rich atmosphere (having an A/F ratio of 14.0) at 400°C for five minutes, reducing the ambient temperature to room temperature in a N₂ atmosphere and measuring the Rh 3d electron binding energy of the material. Figure **7** shows the results obtained by subjecting Rh/Zr/Al₂O₃ (a fresh material having an amount of Rh carried of 1.0 g/L) using ZrO₂ in place of ZrLaO of the former material, i.e., a comparative example, to the same process and measuring the Rh 3d electron binding energy of the material in both the fuel-lean and fuel-rich atmospheres. It is known that the peak value of the Rh 3d electron binding energy is 308.5 eV when Rh is in oxidized state, 307 eV when Rh is in reduced state and 310 eV when Rh is dissolved as a solid solution in alumina.

Referring to the comparative example of Figure **7** (Rh/Zr/Al₂O₃), the peak value of the Rh 3d electron binding energy was in the vicinity of 308 eV in the fuel-lean atmosphere but was in the vicinity of 307 eV in the fuel-rich atmosphere.

On the other hand, as shown in Figure **6****,** the material Rh/ZrLaO/Al₂O₃ in the catalyst according to the present invention did not have a significant difference between the eV characteristics in both the fuel-lean and fuel-rich atmospheres. More specifically, the Rh 3d electron binding energy peak of the catalyst in the fuel-rich atmosphere appeared at a higher energy point (closer to 308 eV) than that when Rh is in reduced state, 307 eV. This shows that Rh in Rh/ZrLaO/Al₂O₃ in the catalyst according to the present invention is not reduced so much but is kept appropriately oxidized even if the ambient atmosphere changes from fuel-lean to fuel-rich conditions.

The reason for this is believed to be that since the ZrLa mixed oxide contains La unlike ZrO₂, La-O-Rh bonds are more likely to be formed between the ZrLa mixed oxide and Rh and, therefore, Rh becomes more likely to be kept oxidized.

On the other hand, Rh on the OSC is basically kept reduced not only under fuel-rich conditions but also under fuel-lean conditions because the OSC stores oxygen.

Therefore, the catalyst according to the present invention provides the coexistence of reduced Rh on the OSC and oxidized Rh on the ZrLa mixed oxide irrespective of whether the ambient atmosphere is fuel-lean or fuel-rich, thereby improving the exhaust gas purification performance. Specifically, if Rh on the mixed oxide is reduced, this will be disadvantageous to the oxidation of HC and CO. However, in the present invention, since Rh on the ZrLa mixed oxide is kept appropriately oxidized even if the ambient atmosphere becomes fuel-rich, HC and CO can be efficiently converted by oxidization. On the other hand, reduced Rh on the OSC effectively act to convert NOx by reduction. Furthermore, since HC and CO can be oxidized even if the ambient atmosphere becomes fuel-rich, NOx reduction progresses concurrently with the oxidization of HC and CO, which is advantageous in converting NOx by reduction.

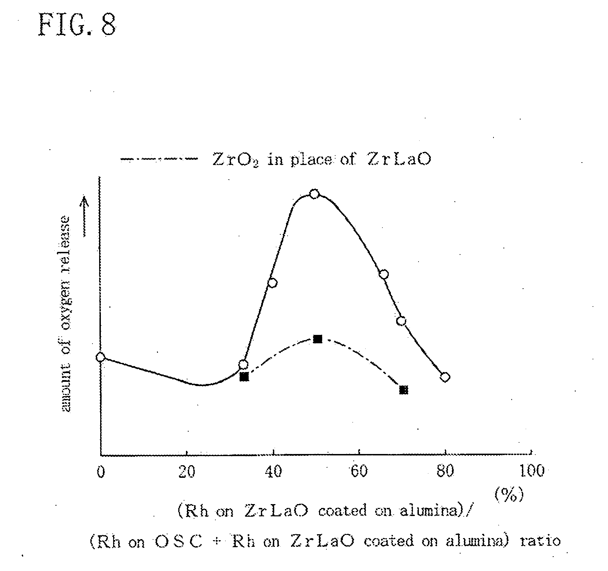

Figure **8** shows the results of examination of catalysts (fresh materials) of an inventive example and a comparative example (using ZrO₂ in place of ZrLaO) in terms of the effect of the mass ratio of Rh carried on the above material ZrLaO/Al₂O₃ (and the above material Zr/Al₂O₃ in the comparative example) on the oxygen release capacity of the OSC. The sum of the amount of Rh on ZrLaO/Al₂O₃ (or Zr/Al₂O₃ in the comparative example) and the amount of Rh on the OSC was 0.167 g/L and a CeZrNd mixed oxide of CeO₂:ZrO₂:Nd₂O₃ = 10:80:10 (mass ratio) was employed as the OSC.

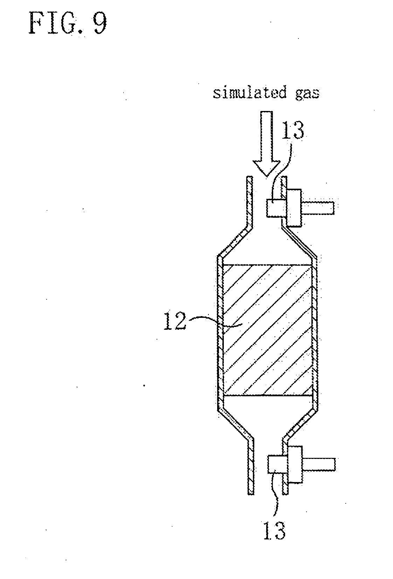

Figure **9** shows the structure of an essential part of a test device for measuring the amount of oxygen release. The test device is configured to allow gas to flow through a sample **12** and has linear oxygen sensors **13, 13** disposed at the entrance and exit of the sample **12.** In the measurement, gas containing 10% CO₂ (and 90% N₂) was first allowed to flow through the sample **12** heated up to 350°C. Then, a simulation was made by repeating the following cycle: oxygen was added to the gas for 20 seconds (to provide fuel-lean conditions); no gas was then added for 20 seconds (to provide stoichiometric conditions); CO was then added for 20 seconds (to provide fuel-rich conditions); and no gas was then added for 20 seconds (to provide stoichiometric conditions). While this cycle was repeated, the output difference between the entrance- and exit-side linear oxygen sensors, i.e., (the output at the catalyst entrance)-(the output at the catalyst exit), was measured. Under fuel-rich conditions, the sample releases oxygen so that the output difference assumes a negative value. The amount of oxygen release in each catalyst sample was obtained by summating the output differences under fuel-rich conditions in certain cycles.

Referring to Figure **8****,** in the inventive example, the amount of oxygen release was large when the mass ratio of Rh carried on ZrLaO/Al₂O₃ was within the range from 33 mass% to 80 mass% both inclusive, and it was particularly large when the mass ratio was within the range from 40 mass% to 70 mass% both inclusive. On the other hand, in the comparative example using ZrO₂ in place of ZrLaO, the amount of oxygen release did not significantly change even if the mass ratio of Rh carried on Zr/Al₂O₃ changed. Thus, it is believed that one of factors of the catalyst according to the present invention exhibiting high activity lies in that the amount of oxygen release from the OSC is increased when the ambient atmosphere becomes fuel-rich. Specifically, when the amount of oxygen release is increased, the catalyst enhances the capacity to convert HC and CO in exhaust gas by reduction and concurrently efficiently reduces NOx.

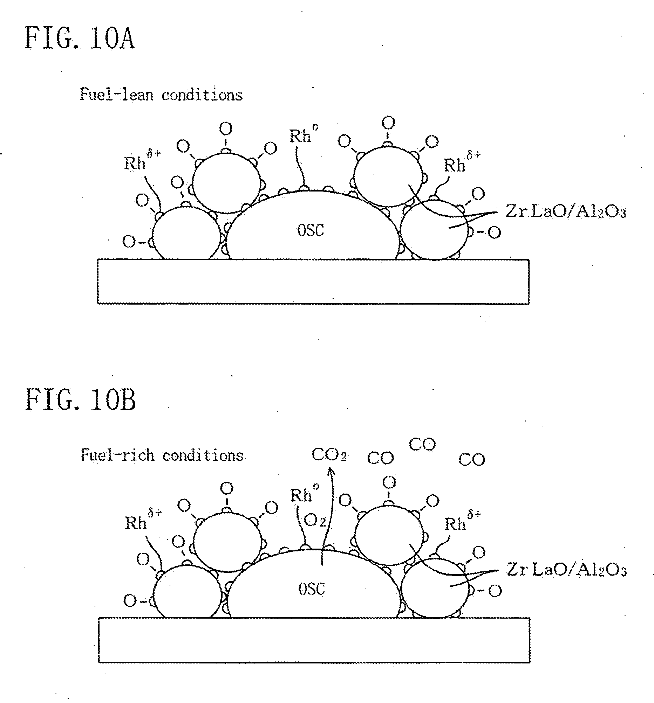

Now, consideration is made of reasons of why the OSC enhances its oxygen release capacity. Figure **10A** schematically shows the surface state of the catalyst under fuel-lean conditions when Rh/ZrLaO/Al₂O₃ coexists with Rh/OSC. Since Rh in Rh/ZrLaO/Al₂O₃ is oxidized under fuel-lean conditions, an active oxygen atom exists on the surface of Rh. On the other hand, Rh on the OSC remains reduced.

As shown in Figure **10B**, when the ambient atmosphere becomes fuel-rich, CO ions in the ambient atmosphere are attracted to active oxygen atoms on the surfaces of Rh particles on Rh/ZrLaO/Al₂O₃. Then, the reaction of CO+O→CO₂ occurs at each Rh particle so that the oxygen atom on the Rh particle is removed. However, Rh in Rh/ZrLaO/Al₂O₃ is likely to be kept oxidized as is obvious from data in Figure **6**. Therefore, oxygen is actively supplied to Rh in Rh/ZrLaO/Al₂O₃ from Rh/OSC absorbing oxygen existing in the vicinity of Rh/ZrLaO/Al₂O₃. In other words, since Rh/OSC coexists with Rh/ZrLaO/Al₂O₃, oxygen release is promoted.

## Claims

1. An exhaust gas purification catalyst in which a catalytic coating (11b) on a support (11a) contains a catalytic metal, a zirconium-based mixed oxide, activated alumina and an oxygen storage component, the exhaust gas purification catalyst containing at least Rh as the catalytic metal, the zirconium-based mixed oxide being coated on at least some of particles of the activated alumina, Rh serving as the catalytic metal being carried on the oxygen storage component, the exhaust gas purification catalyst being **characterized in that**
the Rh serving as the catalytic metal is also carried on the zirconium-based mixed oxide coated on the activated alumina particles, wherein
the zirconium-based mixed oxide is a mixed oxide containing zirconium as a main ingredient and containing lanthanum, and
the ratio of the amount of Rh carried on the zirconium-based mixed oxide coated on the activated alumina particles to the sum of the amount of Rh carried on the zirconium-based mixed oxide coated on the activated alumina particles and the amount of Rh carried on the oxygen storage component is from 40 mass% to 75 mass% both inclusive.

2. The exhaust gas purification catalyst of claim 1, **characterized in that** the said ratio is from 50 mass% to 70 mass% both inclusive.

3. The exhaust gas purification catalyst of claim 1 or 2, **characterized in that** the mass ratio of ZrO₂ to La₂O₃ in the zirconium-based mixed oxide is 5 or larger.

4. The exhaust gas purification catalyst of claim 3, **characterized in that** the mass ratio of ZrO₂ to La₂O₃ in the zirconium-based mixed oxide is from 5 to 20 both inclusive.

## Patentansprüche

1. Ein Abgas-Reinigungskatalysator, in dem eine katalytische Beschichtung (11b) auf einem Träger (11a) ein katalytisches Metall, ein Zirkonium-basiertes Mischoxid, aktiviertes Aluminiumoxid und eine Sauerstoff-Speicherkomponente enthält, wobei der Abgas-Reinigungskatalysator mindestens Rh als das katalytische Metall enthält, das Zirkonium-basierte Mischoxid auf mindestens einige der Teilchen des aktivierten Aluminiumoxids aufgebracht ist, Rh als das katalytische Metall dient, das auf der Sauerstoff-Speicherkomponente getragen wird, wobei der Abgas-Reinigungskatalysator **dadurch gekennzeichnet ist, dass**
das Rh, das als das katalytische Metall dient, auch auf dem Zirkonium-basierten getragen wird, das auf die aktivierten Aluminiumoxid-Teilchen aufgebracht ist, wobei
das Zirkonium-basierte Mischoxid ein Mischoxid ist, das Zirkonium als einen Hauptbestandteil enthält und Lanthan enthält, und
das Verhältnis der Menge an Rh, das auf dem Zirkonium-basierten Mischoxid getragen wird, das auf die aktivierten Aluminiumoxid-Teilchen aufgebracht ist, zu der Summe der Menge an Rh, das auf dem Zirkonium-basierten Mischoxid getragen wird, das auf die aktivierten Aluminiumoxid-Teilchen aufgebracht ist, und der Menge an Rh, das auf der Sauerstoff-Speicherkomponente getragen wird, 40 Masse-% bis 75 Masse-%, beides eingeschlossen, beträgt.

2. Der Abgas-Reinigungskatalysator nach Anspruch 1, **dadurch gekennzeichnet, dass** das Verhältnis 50 Masse-% bis 70 Masse-%, beides eingeschlossen, beträgt.

3. Der Abgas-Reinigungskatalysator nach Anspruch 1 oder 2, **dadurch gekennzeichnet, dass** das Masseverhältnis von ZrO₂ zu La₂O₃ in dem Zirkonium-basierten Mischoxid 5 oder größer ist.

4. Der Abgas-Reinigungskatalysator nach Anspruch 3, **dadurch gekennzeichnet, dass** das Masseverhältnis von ZrO₂ zu La₂O₃ in dem Zirkonium-basierten Mischoxid 5 bis 20, beides eingeschlossen, beträgt.

## Revendications

1. Un catalyseur de purification de gaz d'échappement dans lequel un enduit catalytique (11b) contient un métal catalytique, un oxyde mixte à base de zirconium, de l'alumine activée et composant de stockage d'oxygène, le catalyseur de purification de gaz d'échappement contenant au moins Rh comme métal catalytique, l'oxyde mixte à base de zirconium étant enduit au moins sur certaines particules de l'alumine activée, Rh servant de métal catalytique étant porté sur le composant de stockage d'oxygène, le catalyseur de purification de gaz d'échappement étant **caractérisé en ce que** le Rh servant de métal catalytique est également porté sur l'oxyde mixte porté sur l'oxyde mixte à base de zirconium enduit sur les particules d'alumine activées, où l'oxyde mixte à base de zirconium est un oxyde mixte contenant du zirconium comme ingrédient principal et contenant du lanthane, et le rapport de Rh porté sur l'oxyde mixte enduit sur les particules d'alumine activées sur la somme de Rh total porté sur l'oxyde mixte à base de zirconium enduit sur les particules d'alumine activées et le montant de Rh porté sur le composant de stockage d'oxygène est de 40 à 75 % de la masse les deux inclus.

2. Le catalyseur de la purification du gaz d'échappement de la revendication 1, **caractérisée en ce que** le dit rapport est de 50 de 70 % de la masse les deux inclus.

3. Le catalyseur de purification du gaz d'échappement de la revendication 1 ou 2, **caractérisée en ce que** le rapport de masse de ZrO₂ à La₂O₃ dans l'oxyde mixte à base de zirconium est de 5 ou plus.

4. Le catalyseur de purification du gaz d'échappement de la revendication 3, **caractérisé en ce que** le rapport de masse de ZrO₂ à La₂O₃ dans l'oxyde mixte à base de zirconium est de 5 à 20 les deux inclus.
